# EUROPEAN PATENT SPECIFICATION

(11) **EP 4 167 751 B1**
(45) Date of publication and mention of the grant of the patent: **09.10.2024**
(21) Application number: 21732911.9
(22) Date of filing: 17.06.2021
(51) Int. Cl.: A23G 1/36, A23G 1/38, A23D 9/00, A23G 1/00, A23G 3/40, A23D 9/04, C11B 7/00

(54) **PROCESS OF PREPARING A FAT COMPOSITION**
VERFAHREN ZUR HERSTELLUNG EINER FETTZUSAMMENSETZUNG
PROCÉDÉ DE PRÉPARATION D'UNE COMPOSITION DE GRAISSE

(30) Priority: 19.06.2020 EP 20181214
(43) Date of publication of application: 26.04.2023
(60) Divisional application: 24198510.0
(73) Proprietor: Bunge Loders Croklaan B.V., 1521 AZ Wormerveer (NL)
(72) Inventor: DEKKER, Willem, 1521 AZ Wormerveer (NL); WERLEMAN, Jeanine Luvelle, 1521 AZ Wormerveer (NL); 'T ZAND, Imro, 1521 AZ Wormerveer (NL); HILDERING, Yvonne, 1521 AZ Wormerveer (NL)
(74) Representative: Potter Clarkson
(86) International application number: PCT/EP2021/066486
(87) International publication number: WO 2021/255198

(56) References cited:
- EP-A1- 2 030 508
- WO-A1-2014/069218
- WO-A1-2018/138335
- JP-A- 2013 172 679

## Description

This invention relates to a process of preparing a fat composition. As not part of the present invention, there are also disclosed below a fat composition produced thereby, uses of the fat composition and a confectionery product comprising the fat composition.

### Background

Fats and oils are important ingredients of food products. Fats and oils are sometimes subjected to an interesterification process which randomly redistributes the fatty acid acyl residues amongst the glyceride molecules. This process can alter the physical properties of the fat or oil, such as its melting point.

Shea butter is a fat obtained from the nuts of the shea tree *(Vitellaria paradoxa*). Shea butter is relatively rich in stearic acid (C18:0) and oleic acid (C18:1). Shea butter is often fractionated to form shea stearin and shea olein. Shea stearin is rich in StOSt (1,3-distearoyl-2-oleoyl glyceride) and is often used as a component together with other fat components in order to produce cocoa butter equivalents. Similar to shea butter, other fats such as sal butter, mango kernel fat or kokum fat are also often fractionated to produce a stearin fraction which can be used as a component to produce a cocoa butter equivalent.

Cocoa butter equivalents (CBEs) are fat compositions that can be used in combination with cocoa butter in confectionery applications. Suitable fats which can be used to produce CBEs are palm oil, illipe butter, sal butter, shea butter, kokum fat and mango kernel fat. CBEs are in general blends of fractionated forms of these fats that have a triglyceride composition that is closer to that of cocoa butter. Thus, different fat sources are required in order to make a desirable CBE. CBEs could also be produced via enzymatic transesterification or interesterification. However, such processes are particularly complex and inefficient. Also, the products of enzymatic reactions are often not recognized as CBEs by regulatory bodies. Therefore, they are also not in general accepted by consumers.

WO 2019/020714 discloses a non-hydrogenated fat composition comprising greater than 28% by weight stearic acid (C18:0) fatty acid residues; greater than 44% by weight oleic acid (C18:1) fatty acid residues, and less than 10% by weight of palmitic acid (C16) fatty acid residues, based on the total C8-C24 fatty acid residues, and greater than 30% by weight of the combined amounts of StOSt, StStO, StOO and OStO triglycerides based on the total glycerides present in the composition, wherein the weight ratio of (StOSt+StStO)/(StOO + OStO) is from 0.6-1.5.

EP-A-3 587 543 concerns the problem of providing shea olein which can maintain fluidity in a liquid state for a long time at ambient temperature, and in a preferred embodiment, can maintain fluidity in a liquid state for a long time over a wide temperature range from low temperature to ambient temperature.

WO 2012/052471 discloses an edible product containing 15-80 wt% of triglycerides, 20-85 wt% of filler, and at most 15 wt% water, wherein the triglycerides contain as acid residues 20-70 wt% of total SAFA, at most 5 wt% of TFA, thereby C8, C10 and C12 in a weight ratio of (C8+C10+C12)/total SAFA of at least 10% and a weight ratio of (C8+C10)/C12 of at least 5%, whereby the weight ratio D/B is at least 1.5 and the weight ratio of B/total SAFA is at most 0.5, in which D represents the sum of the amounts of all MUFA and PUFA, and B represents the sum of the amounts of C14 and C16, and which triglyceride composition has an SFC at 20°C of at least 5 wt%.

WO 2014/037009 relates to a process for the production of cocoa butter equivalent (CBE).

GB-A-2 028 862 relates to a cacao butter substitute, especially a temper-type cacao butter substitute, wherein the saturated fatty acid radicals comprise substantially palmitic acid radicals, stearic acid radicals and arachidic acid radicals; the unsaturated fatty acid radicals comprise substantially oleic acid radicals and linoleic acid radicals; and the proportions of respective triglycerides are limited.

EP-A-2 679 099 provides a chocolate or chocolate-like food capable of inhibiting occurrence of low-temperature bloom.

WO 2015/150405 relates to a fatty acid composition comprising greater than 60% by weight stearic acid; from 3 to 30 % by weight oleic acid; and less than 10% by weight palmitic acid. The composition may be used in the preparation of a triglyceride.

WO 2018/138335 discloses a fat composition comprising from 55 to 75 % StOSt; from 10 to 25 % POSt; and less than 10 % POP; said percentages being by weight based on total triglycerides present in the composition, and has the following N-values: N35 of less than 45; and N10 of greater than 80.

WO 2016/200329 relates to a confectionery product comprising chocolate, wherein the chocolate has a fat phase comprising 60.0 -99.9% by weight of triglycerides, 40.0 -99.0 by weight of triglycerides having C16 -C20 saturated fatty acids in the sn-1 and sn-3 positions of the triglyceride and oleic acid in the sn-2 position of the triglyceride.

WO 2011/048169 discloses stearin fats, obtainable by dry or solvent fractionation of sunflower high-stearic and high-oleic oils, optionally with seeding with tempered stearin crystals.

US 2008/0089995 and US 2008/0085358 relate to an oily food material which, when eaten, gives a satisfactory feeling in the mouth and heat resistance.

EP-A-3 087 847 provides a method for suppressing an increase in the viscosity of a water-containing heat-resistant chocolate mix.

EP-A-2 868 204 relates to a chocolate with heat-resistance, bloom resistance and melt-in-the-mouth property.

EP-A-2 412 245 discloses a method for producing a hard butter composition via ester exchange using a 1,3-specific lipase.

WO 2014/069218 A1 discloses a heat-resistant chocolate having good mouthfeeling and blooming resistance and a process for producing the same.

EP 2 030 508 A1 discloses a food product containing, inter alia, between 5 and 90% of a fat phase containing between 0 and 65 wt% of a liquid oil and between 35 and 100 wt% of a hard fat component with a StOSt/POP ratio of at least 2.

JP 2013 172679 A discloses a chocolate suitable for tempering type chocolate for frozen desserts.

There remains a need for a simplified process, without any modification by enzymatic reaction, to produce confectionery fat compositions, such as coating fats, in particular cocoa butter equivalents (CBEs), by using a fat preferably from a single natural source, instead of multiple fats in order to reduce the complexity and the cost of the process and to increase the efficiency of the use of the relevant fat source, such as, in particular, shea butter. There is also a need for comparable or even improved quality confectionery products, such as chocolates, using fat compositions that can be produced via a simplified and efficient process compared to conventional products. Meanwhile, there also remains a need to easily control and maintain the quality and the composition of such confectionery fat compositions by avoiding uncontrollable fluctuations in the quality of the raw fat sources.

### Description of the invention

According to the present invention, there is provided a process of preparing a fat composition comprising the steps of: a) providing a fat comprising at least 25% by weight of StOSt triglycerides based on the total glycerides present in the fat, wherein St is stearic acid and O is oleic acid; b) fractionating the fat source obtained in step a) to form a stearin fraction comprising at least 60% by weight of StOSt triglycerides based on the total glycerides present in the fat, wherein St is stearic acid and O is oleic acid; and c) blending a fat which is the same as that provided in step a) and the stearin fraction obtained in step b) in a weight ratio of from 90:10 to 10:90 to form a fat composition.

For instance, the process of the present invention may comprise the steps of a) providing a fat consisting of shea butter, b) fractionating the shea butter to form a stearin fraction comprising at least 60% by weight of StOSt triglycerides based on the total glycerides present in the fat and c) blending the shea butter with the stearin fraction obtained in step b) in a weight ratio of from 90:10 to 10:90 to form a fat composition.

The process of the invention has been found to be particularly useful for producing a fat composition suitable for confectionery applications from a single natural fat source without any complex process route involving multiple fat sources or any complex modification steps such as an enzymatic reaction. Accordingly, the process of the invention has been particularly simplified and the efficiency of the process can be significantly improved. Also, the process of the invention is suitable for maintaining the constant and reliable quality of the prepared fat composition with minimized influence of the quality of the raw fat material in comparison to merely using the unmodified natural fat source alone. Furthermore, the process also improves the use of the single natural fat source. In addition, it has been surprisingly found that the fat composition obtained by the improved process according to the invention can still enable producing an acceptable or even improved confectionery product, particularly in terms of texture and organoleptic properties.

The term "fat" refers to glyceride fats and oils containing fatty acid acyl groups and does not imply any particular melting point. The term "oil" or "butter" is used synonymously with "fat". The term "fatty acid" refers to straight chain saturated or unsaturated (including mono- and poly unsaturated) carboxylic acids having from 8 to 24 carbon atoms. A fatty acid having x carbon atoms and y double bonds may be denoted Cx:y. For example, palmitic acid may be denoted C16:0 and oleic acid may be denoted C18:1. The fatty acid profile may be determined by fatty acid methyl ester analysis (FAME) using gas chromatography according to ISO 12966-2 and ISO 12966-4. Thus, percentages of fatty acids in compositions (e.g. palmitic acid (C16:0), stearic acid (C18:0), oleic acid (C18:1) etc.) referred to herein include both acyl groups such as tri-, di- and mono- glycerides and free fatty acids (but exclude any unsaponifiable matter) and are based on the total weight of C8 to C24 fatty acid residues.

The term "triglyceride" refers to glycerides consisting of three fatty acid chains covalently bonded to a glycerol molecule. Amounts of triglycerides specified herein are percentages by weight based on total triglycerides present in the fat composition. The notation triglyceride XYZ denotes triglycerides having fatty acid acyl groups X, Y and Z at any of the 1-, 2- and 3-positions of the glyceride. The notation A2B includes both AAB and ABA, and AB2 includes both ABB and BAB. Triglyceride content may be determined for example by GC (ISO 23275).

The fat provided in part a) of the process of the invention is preferably from a natural fat source, more preferably a single natural fat source. The term "natural fat source" refers to a source of fat that is naturally occurring (e.g., from a single vegetable source such as shea) in contrast to synthetic fats. A fat from a natural fat source will not have undergone fractionation or reaction of the fat, such as interesterification, and is not blended with greater than 10 % by weight, of fats from other sources, preferably not blended with any other fats i.e., it preferably consists of the fat from the natural fat source. The fat obtained from a natural fat source may have been subjected to one or more refining steps well-known in the art, such as neutralization, bleaching and deodorization.

The term "fractionating" or "fractionation" refers to a process well known in the art for separating the liquid part (olein fraction) and the solid part (stearin fraction) based on different melting points or hardness. Typical fractionation processes include dry fractionation, solvent fractionation (also known as wet fractionation) and detergent fractionation.

In a preferred embodiment, the fat composition prepared according to the process of the invention is a confectionery fat composition, more preferably a coating fat composition and even more preferably a cocoa butter equivalent (CBE) fat composition.

The term "cocoa butter equivalent" refers to the vegetable fats other than cocoa butter that have physical properties and a molecular structure that are virtually identical to those of cocoa butter.

Therefore, in a further aspect, the invention provides a process for producing a confectionery product, preferably a chocolate product (including chocolate-like products) or a coating, which comprises preparing a fat composition according to the process of the present invention, combining the fat composition with one or more confectionery ingredients, preferably selected from cocoa mass, cocoa butter, milk fat, skimmed milk powder, milk powder, vegetable milk powder, dairy powder, sweetener other than sugar and mixtures thereof, tempering the resulting confectionery composition and molding to form the chocolate product. Tempering may, for example, be carried out by cooling the confectionery composition to 26-28 °C from a higher temperature, and then heating to 31-32 °C. It has surprisingly been found that tempering a confectionery composition comprising a fat composition of the invention can be carried out more easily, with the formation of a greater number of seed crystals.

In step a) of the process according to the invention, the fat, which is preferably from a single natural source, preferably comprises from 25% to 70% by weight of StOSt triglycerides based on the total glycerides present in the fat, wherein St is stearic acid and O is oleic acid, more preferably from 30% to 70% by weight, even more preferably from 35% to 65% by weight and most preferably from 37% to 63% by weight.

In step a) of the process according to the invention, the fat is preferably selected from the group consisting of shea butter, sal butter, mango kernel oil, illipe butter, kokum butter and mowrah butter. More preferably, the fat consists of shea butter.

In step b) of the process according to the invention, the stearin fraction that is formed preferably comprises from 60% to 95% by weight of StOSt triglycerides based on the total glycerides present in the fat, wherein St is stearic acid and O is oleic acid, more preferably from 62% to 90% by weight, even more preferably from 65% to 85% by weight and most preferably from 68% to 82% by weight.

In step b) of the process according to the invention, the fractionation is performed preferably by means of dry fractionation, solvent fractionation or detergent fractionation, more preferably by means of dry fractionation or solvent fractionation and even more preferably by means of solvent fractionation.

In step c) of the process according to the invention, the fat source is the same as that provided in step a) and the stearin fraction obtained in step b) are blended in a weight ratio of from 90:10 to 10:90 to form a fat composition. For example, if a fat consisting of shea butter is provided in step a) of the process of the present invention, step c) comprises blending the shea butter and the stearin fraction obtained in step b) in a weight ratio of from 90:10 to 10:90 to form a fat composition. The weight ratio of the fat source which is the same as that provided in step a) to the stearin fraction obtained in step b) is preferably from 90:10 to 15:85, more preferably from 85:15 to 20:80, even more preferably from 85:15 to 30:70 and most preferably from 82:18 to 35:65.

In a preferred embodiment, the process of preparing a fat composition according to the invention comprises the steps of: a) providing a fat selected from the group consisting of shea butter, sal butter, mango kernel oil, illipe butter, kokum butter and mowrah butter comprising from 25% to 70% by weight of StOSt triglycerides based on the total glycerides present in the fat, wherein St is stearic acid and O is oleic acid; b) fractionating the fat source obtained in step a) to form a stearin fraction comprising from 60% to 95% by weight of StOSt triglycerides based on the total glycerides present in the fat, wherein St is stearic acid and O is oleic acid; and c) blending the fat source which is the same as that provided in step a) and the stearin fraction obtained in step b) in a weight ratio of from 90:10 to 15:85 to form a fat composition.

In a more preferred embodiment, the process of preparing a fat composition according to the invention comprises the steps of: a) providing a fat selected from the group consisting of shea butter, sal butter, mango kernel oil, illipe butter, kokum butter and mowrah butter comprising from 30% to 70% by weight of StOSt triglycerides based on the total glycerides present in the fat, wherein St is stearic acid and O is oleic acid; b) fractionating the fat source obtained in step a) to form a stearin fraction comprising from 62% to 90% by weight of StOSt triglycerides based on the total glycerides present in the fat, wherein St is stearic acid and O is oleic acid; and c) blending the fat source which is the same as that provided in step a) and the stearin fraction obtained in step b) in a weight ratio of from 85:15 to 20:80 to form a fat composition.

In an even more preferred embodiment, the process of preparing a fat composition according to the invention comprises the steps of: a) providing fat source which consists of shea butter comprising from 35% to 65% by weight of StOSt triglycerides based on the total glycerides present in the fat, wherein St is stearic acid and O is oleic acid; b) fractionating the fat source obtained in step a) to form a stearin fraction comprising from 65% to 85% by weight of StOSt triglycerides based on the total glycerides present in the fat, wherein St is stearic acid and O is oleic acid; and c) blending the fat source which is the same as that provided in step a) and the stearin fraction obtained in step b) in a weight ratio of from 85:15 to 30:70 to form a fat composition.

In a most preferred embodiment, the process of preparing a fat composition according to the invention comprises the steps of: a) providing fat source which consists of shea butter comprising from 37% to 63% by weight of StOSt triglycerides based on the total glycerides present in the fat, wherein St is stearic acid and O is oleic acid; b) fractionating the fat source obtained in step a) to form a stearin fraction comprising from 68% to 82% by weight of StOSt triglycerides based on the total glycerides present in the fat, wherein St is stearic acid and O is oleic acid; and c) blending the fat source which is the same as that provided in step a) and the stearin fraction obtained in step b) in a weight ratio of from 82:18 to 35:65 to form a fat composition.

The fat composition obtained in step c) is preferably further refined. More preferably, the fat composition is neutralized, bleached and deodorized. Even more preferably, the fat composition is bleached and deodorized.

Alternatively, the fat source provided in step a) and/or the stearin fraction obtained in step b) may preferably be refined before the step c), more preferably be neutralized, bleached and deodorized and even more preferably be bleached and deodorized.

The fat composition obtained in step c) preferably comprises from 35% to 70% by weight of StOSt triglycerides based on the total glycerides present in the fat, wherein St is stearic acid and O is oleic acid, more preferably from 40% to 65% by weight, even more preferably from 42% to 63% by weight and most preferably from 45% to 60% by weight, such as from 45% to 59% by weight, for example from 45% to 58.5% by weight. In one embodiment, the composition obtained in step c) may comprise from 35% to 59% by weight StOSt triglycerides based on the total glycerides present in the fat, wherein St is stearic acid and O is oleic acid, such as from 40% to 58.5% by weight.

The fat composition obtained in step c) preferably comprises from 5% to 40% by weight of StOO triglycerides based on the total glycerides present in the fat, wherein St is stearic acid and O is oleic acid, more preferably from 7% to 35% by weight, even more preferably from 9% to 30% by weight and most preferably from 11% to 25% by weight.

Accordingly, in a preferred embodiment, the fat composition obtained in step c) comprises from 35% to 70% by weight of StOSt triglycerides and from 5% to 40% by weight of StOO triglycerides based on the total glycerides present in the fat, wherein St is stearic acid and O is oleic acid.

In a more preferred embodiment, the fat composition obtained in step c) comprises from 40% to 65% by weight of StOSt triglycerides and from 7% to 35% by weight of StOO triglycerides based on the total glycerides present in the fat, wherein St is stearic acid and O is oleic acid. In an even more preferred embodiment, the fat composition obtained in step c) comprises from 42% to 63% by weight of StOSt triglycerides and from 9% to 30% by weight of StOO triglycerides based on the total glycerides present in the fat, wherein St is stearic acid and O is oleic acid.

In a most preferred embodiment, the fat composition obtained in step c) comprises from 45% to 60% by weight of StOSt triglycerides and from 11% to 25% by weight of StOO triglycerides based on the total glycerides present in the fat, wherein St is stearic acid and O is oleic acid.

The fat composition obtained in step c) preferably comprises from 30% to 67% by weight of stearic acid (C18:0), more preferably from 35% to 65% by weight, even more preferably from 40% to 60% by weight and most preferably from 42% to 58% by weight; said percentage of acid referring to acids bound as acyl groups in glycerides in the fat composition and being based on the total weight of C8 to C24 fatty acids.

The fat composition obtained in step c) preferably comprises from 30% to 60% by weight of oleic acid (C18:1), more preferably from 32% to 55% by weight, even more preferably from 35% to 50% by weight and most preferably from 35% to 45% by weight; said percentage of acid referring to acids bound as acyl groups in glycerides in the fat composition and being based on the total weight of C8 to C24 fatty acids.

The fat composition obtained in step c) preferably comprises at most 12% by weight of palmitic acid (C16:0), more preferably from 0% to 10% by weight, even more preferably from 0.1% to 8% by weight and most preferably from 0.1% to 7% by weight; said percentage of acid referring to acids bound as acyl groups in glycerides in the fat composition and being based on the total weight of C8 to C24 fatty acids.

Accordingly, in a preferred embodiment, the fat composition obtained in step c) comprises from 30% to 67% by weight of stearic acid (C18:0); from 30% to 60% by weight of oleic acid (C18:1); and at most 12% by weight of palmitic acid (C16:0); said percentage of acid referring to acids bound as acyl groups in glycerides in the fat composition and being based on the total weight of C8 to C24 fatty acids.

In a more preferred embodiment, the fat composition obtained in step c) comprises from 35% to 65% by weight of stearic acid (C18:0); from 32% to 55% by weight of oleic acid (C18:1); and from 0% to 10% by weight of palmitic acid (C16:0); said percentage of acid referring to acids bound as acyl groups in glycerides in the fat composition and being based on the total weight of C8 to C24 fatty acids.

In an even more preferred embodiment, the fat composition obtained in step c) comprises from 40% to 60% by weight of stearic acid (C18:0); from 35% to 50% by weight of oleic acid (C18:1); and from 0.1% to 8% by weight of palmitic acid (C16:0); said percentage of acid referring to acids bound as acyl groups in glycerides in the fat composition and being based on the total weight of C8 to C24 fatty acids.

In a most preferred embodiment, the fat composition obtained in step c) comprises from 42% to 58% by weight of stearic acid (C18:0); from 35% to 45% by weight of oleic acid (C18:1); and from 0.1% to 7% by weight of palmitic acid (C16:0); said percentage of acid referring to acids bound as acyl groups in glycerides in the fat composition and being based on the total weight of C8 to C24 fatty acids.

The fat composition obtained in step c) preferably comprises at most 2% by weight of lauric acid (C12:0), more preferably from 0% to 1% by weight, even more preferably from 0% to 0.8% by weight and most preferably from 0.1% to 0.5% by weight; said percentage of acid referring to acids bound as acyl groups in glycerides in the fat composition and being based on the total weight of C8 to C24 fatty acids.

The fat composition obtained in step c) preferably has from 25 to 80 solid fat content at 20°C, more preferably from 30 to 70, even more preferably from 35 to 68 and most preferably from 40 to 67; measured on 26°C stabilized fat according to ISO 8292-1 .

The fat composition obtained in step c) preferably has from 15 to 75 solid fat content at 25°C, more preferably from 25 to 68, even more preferably from 35 to 67 and most preferably from 40 to 65; measured on 26°C stabilized fat according to ISO 8292-1 .

The fat composition obtained in step c) preferably has from 10 to 68 solid fat content at 30°C, more preferably from 20 to 65, even more preferably from 25 to 63 and most preferably from 30 to 60; measured on 26°C stabilized fat according to ISO 8292-1 .

The fat composition obtained in step c) preferably has from 5 to 50 solid fat content at 35°C, more preferably from 7 to 45, even more preferably from 9 to 40 and most preferably from 12 to 38; measured on 26°C stabilized fat according to ISO 8292-1.

The fat composition obtained in step c) preferably has from 0 to 12 solid fat content at 40°C, more preferably from 0 to 10, even more preferably from 1 to 5 and most preferably from 1 to 3; measured on 26°C stabilized fat according to ISO 8292-1.

Accordingly, in a preferred embodiment, the fat composition obtained in step c) has from 25 to 80 solid fat content at 20°C; from 15 to 75 solid fat content at 25°C; from 10 to 68 solid fat content at 30°C; from 5 to 50 solid fat content at 35°C; and from 0 to 12 solid fat content at 40°C; measured on 26°C stabilized fat according to ISO 8292-1.

In a more preferred embodiment, the fat composition obtained in step c) has from 30 to 70 solid fat content at 20°C; from 25 to 68 solid fat content at 25°C; from 20 to 65 solid fat content at 30°C; from 7 to 45 solid fat content at 35°C; and from 0 to 10 solid fat content at 40°C; measured on 26°C stabilized fat according to ISO 8292-1.

In an even more preferred embodiment, the fat composition obtained in step c) has from 35 to 68 solid fat content at 20°C; from 35 to 67 solid fat content at 25°C; from 25 to 63 solid fat content at 30°C; from 9 to 40 solid fat content at 35°C; and from 1 to 5 solid fat content at 40°C; measured on 26°C stabilized fat according to ISO 8292-1.

In a most preferred embodiment, the fat composition obtained in step c) has from 40 to 67 solid fat content at 20°C; from 40 to 65 solid fat content at 25°C; from 30 to 60 solid fat content at 30°C; from 12 to 38 solid fat content at 35°C; and from 1 to 3 solid fat content at 40°C; measured on 26°C stabilized fat according to ISO 8292-1.

The fat composition obtained in step c) preferably comprises from 0% to 2% by weight of trans fatty acids, preferably from 0% to 1.5% by weight of trans fatty acids, more preferably from 0.1% to 1% by weight of trans fatty acid and even more preferably from 0.1% to 0.8% by weight.

Accordingly, in a preferred embodiment, the fat composition obtained in step c) comprises from 35% to 70% by weight of StOSt triglycerides and from 5% to 40% by weight of StOO triglycerides based on the total glycerides present in the fat, wherein St is stearic acid and O is oleic acid; from 30% to 67% by weight of stearic acid (C18:0); from 30% to 60% by weight of oleic acid (C18:1); and at most 12% by weight of palmitic acid (C16:0); said percentage of acid referring to acids bound as acyl groups in glycerides in the fat composition and being based on the total weight of C8 to C24 fatty acids; and has the fat composition obtained in step c) has from 25 to 80 solid fat content at 20°C; from 15 to 75 solid fat content at 25°C; from 10 to 68 solid fat content at 30°C; from 5 to 50 solid fat content at 35°C; and from 0 to 12 solid fat content at 40°C; measured on 26°C stabilized fat according to ISO 8292-1.

In a more preferred embodiment, the fat composition obtained in step c) comprises from 40% to 65% by weight of StOSt triglycerides and from 7% to 35% by weight of StOO triglycerides based on the total glycerides present in the fat, wherein St is stearic acid and O is oleic acid; from 35% to 65% by weight of stearic acid (C18:0); from 32% to 55% by weight of oleic acid (C18:1); and from 0% to 10% by weight of palmitic acid (C16:0); said percentage of acid referring to acids bound as acyl groups in glycerides in the fat composition and being based on the total weight of C8 to C24 fatty acids; and has from 30 to 70 solid fat content at 20°C; from 25 to 68 solid fat content at 25°C; from 20 to 65 solid fat content at 30°C; from 7 to 45 solid fat content at 35°C; and from 0 to 10 solid fat content at 40°C; measured on 26°C stabilized fat according to ISO 8292-1.

In an even more preferred embodiment, the fat composition obtained in step c) comprises from 42% to 63% by weight of StOSt triglycerides and from 9% to 30% by weight of StOO triglycerides based on the total glycerides present in the fat, wherein St is stearic acid and O is oleic acid; from 40% to 60% by weight of stearic acid (C18:0); from 35% to 50% by weight of oleic acid (C18:1); and from 0.1% to 8% by weight of palmitic acid (C16:0); said percentage of acid referring to acids bound as acyl groups in glycerides in the fat composition and being based on the total weight of C8 to C24 fatty acids; and has from 35 to 68 solid fat content at 20°C; from 35 to 67 solid fat content at 25°C; from 25 to 63 solid fat content at 30°C; from 9 to 40 solid fat content at 35°C; and from 1 to 5 solid fat content at 40°C; measured on 26°C stabilized fat according to ISO 8292-1.

In a most preferred embodiment, the fat composition obtained in step c) comprises from 45% to 60% by weight of StOSt triglycerides and from 11 % to 25% by weight of StOO triglycerides based on the total glycerides present in the fat, wherein St is stearic acid and O is oleic acid; from 42% to 58% by weight of stearic acid (C18:0); from 35% to 45% by weight of oleic acid (C18:1); and from 0.1% to 7% by weight of palmitic acid (C16:0); said percentage of acid referring to acids bound as acyl groups in glycerides in the fat composition and being based on the total weight of C8 to C24 fatty acids; and has from 40 to 67 solid fat content at 20°C; from 40 to 65 solid fat content at 25°C; from 30 to 60 solid fat content at 30°C; from 12 to 38 solid fat content at 35°C; and from 1 to 3 solid fat content at 40°C; measured on 26°C stabilized fat according to ISO 8292-1.

The fat composition obtained in step c) may comprise from 35% to 59% by weight StOSt triglycerides based on the total glycerides present in the fat, wherein St is stearic acid and O is oleic acid, for example from 40% to 58.5% by weight. In one embodiment, the composition obtained in step c) may comprise from 45% to 59% by weight StOSt triglycerides based on the total glycerides present in the fat, wherein St is stearic acid and O is oleic acid, such as from 45% to 58.5% by weight.

The fat composition obtained in step c) optionally has a weight ratio of POSt triglycerides to StOSt triglycerides of from 0.04 to 0.16, such as from 0.05 to 0.15, for example from 0.06 to 0.14 or from 0.07 to 0.13, based on the total glycerides present in the fat, wherein St is stearic acid, P is palmitic acid and O is oleic acid.

Accordingly, in a preferred embodiment, the process of preparing a fat composition according to the invention comprises the steps of: a) providing a fat selected from the group consisting of shea butter, sal butter, mango kernel oil, illipe butter, kokum butter and mowrah butter comprising from 25% to 70% by weight of StOSt triglycerides based on the total glycerides present in the fat, wherein St is stearic acid and O is oleic acid; b) fractionating the fat of in step a) to form a stearin fraction comprising from 60% to 95% by weight of StOSt triglycerides based on the total glycerides present in the fat, wherein St is stearic acid and O is oleic acid; and c) blending the fat of in step a) and the stearin fraction obtained in step b) in a weight ratio of from 90:10 to 15:85 to form a fat composition comprising from 35% to 70% by weight of StOSt triglycerides and from 5% to 40% by weight of StOO triglycerides based on the total glycerides present in the fat, wherein St is stearic acid and O is oleic acid; from 30% to 67% by weight of stearic acid (C18:0); from 30% to 60% by weight of oleic acid (C18:1); and at most 12% by weight of palmitic acid (C16:0); said percentage of acid referring to acids bound as acyl groups in glycerides in the fat composition and being based on the total weight of C8 to C24 fatty acids; and has the fat composition obtained in step c) has from 25 to 80 solid fat content at 20°C; from 15 to 75 solid fat content at 25°C; from 10 to 68 solid fat content at 30°C; from 5 to 50 solid fat content at 35°C; and from 0 to 12 solid fat content at 40°C; measured on 26°C stabilized fat according to ISO 8292-1.

In a more preferred embodiment, the process of preparing a fat composition according to the invention comprises the steps of: a) providing a fat selected from the group consisting of shea butter, sal butter, mango kernel oil, illipe butter, kokum butter and mowrah butter comprising from 30% to 70% by weight of StOSt triglycerides based on the total glycerides present in the fat, wherein St is stearic acid and O is oleic acid; b) fractionating the fat obtained in step a) to form a stearin fraction comprising from 62% to 90% by weight of StOSt triglycerides based on the total glycerides present in the fat, wherein St is stearic acid and O is oleic acid; and c) blending the fat of step a) and the stearin fraction obtained in step b) in a weight ratio of from 85:15 to 20:80 to form a fat composition comprising from 40% to 65% by weight of StOSt triglycerides and from 7% to 35% by weight of StOO triglycerides based on the total glycerides present in the fat, wherein St is stearic acid and O is oleic acid; from 35% to 65% by weight of stearic acid (C18:0); from 32% to 55% by weight of oleic acid (C18:1); and from 0% to 10% by weight of palmitic acid (C16:0); said percentage of acid referring to acids bound as acyl groups in glycerides in the fat composition and being based on the total weight of C8 to C24 fatty acids; and has from 30 to 70 solid fat content at 20°C; from 25 to 68 solid fat content at 25°C; from 20 to 65 solid fat content at 30°C; from 7 to 45 solid fat content at 35°C; and from 0 to 10 solid fat content at 40°C; measured on 26°C stabilized fat according to ISO 8292-1.

In an even more preferred embodiment, the process of preparing a fat composition according to the invention comprises the steps of: a) providing a fat which is shea butter comprising from 35% to 65% by weight of StOSt triglycerides based on the total glycerides present in the fat, wherein St is stearic acid and O is oleic acid; b) fractionating the shea butter to form a stearin fraction comprising from 65% to 85% by weight of StOSt triglycerides based on the total glycerides present in the fat, wherein St is stearic acid and O is oleic acid; and c) blending the shea butter of step a) and the stearin fraction obtained in step b) in a weight ratio of from 85:15 to 30:70 to form a fat composition comprising from 42% to 63% by weight of StOSt triglycerides and from 9% to 30% by weight of StOO triglycerides based on the total glycerides present in the fat, wherein St is stearic acid and O is oleic acid; from 40% to 60% by weight of stearic acid (C18:0); from 35% to 50% by weight of oleic acid (C18:1); and from 0.1% to 8% by weight of palmitic acid (C16:0); said percentage of acid referring to acids bound as acyl groups in glycerides in the fat composition and being based on the total weight of C8 to C24 fatty acids; and has from 35 to 68 solid fat content at 20°C; from 35 to 67 solid fat content at 25°C; from 25 to 63 solid fat content at 30°C; from 9 to 40 solid fat content at 35°C; and from 1 to 5 solid fat content at 40°C; measured on 26°C stabilized fat according to ISO 8292-1.

In a most preferred embodiment, the process of preparing a fat composition according to the invention comprises the steps of: a) providing shea butter comprising from 37% to 63% by weight of StOSt triglycerides based on the total glycerides present in the fat, wherein St is stearic acid and O is oleic acid; b) fractionating the shea butter of step a) to form a stearin fraction comprising from 68% to 82% by weight of StOSt triglycerides based on the total glycerides present in the fat, wherein St is stearic acid and O is oleic acid; and c) blending the shea butter of step a) and the stearin fraction obtained in step b) in a weight ratio of from 82:18 to 35:65 to form a fat composition comprising from 45% to 60% by weight of StOSt triglycerides and from 11% to 25% by weight of StOO triglycerides based on the total glycerides present in the fat, wherein St is stearic acid and O is oleic acid; from 42% to 58% by weight of stearic acid (C18:0); from 35% to 45% by weight of oleic acid (C18:1); and from 0.1% to 7% by weight of palmitic acid (C16:0); said percentage of acid referring to acids bound as acyl groups in glycerides in the fat composition and being based on the total weight of C8 to C24 fatty acids; and has from 40 to 67 solid fat content at 20°C; from 40 to 65 solid fat content at 25°C; from 30 to 60 solid fat content at 30°C; from 12 to 38 solid fat content at 35°C; and from 1 to 3 solid fat content at 40°C; measured on 26°C stabilized fat according to ISO 8292-1.

The fat composition obtained in step c) may comprise from 35% to 59% by weight StOSt triglycerides based on the total glycerides present in the fat, wherein St is stearic acid and O is oleic acid, for example from 40% to 58.5% by weight. In one embodiment, the composition obtained in step c) may comprise from 45% to 59% by weight StOSt triglycerides based on the total glycerides present in the fat, wherein St is stearic acid and O is oleic acid, such as from 45% to 58.5% by weight.

The fat composition obtained in step c) optionally has a weight ratio of POSt triglycerides to StOSt triglycerides of from 0.04 to 0.16, such as from 0.05 to 0.15, for example from 0.06 to 0.14 or from 0.07 to 0.13, based on the total glycerides present in the fat, wherein St is stearic acid, P is palmitic acid and O is oleic acid.

In a further preferred embodiment, the fat composition obtained in step c) comprises at most 15% by weight of POP triglycerides based on the total glycerides present in the fat, wherein P is palmitic acid and O is oleic acid, more preferably from 0% to 10% by weight, even more preferably from 0.1% to 8% by weight and most preferably from 0.1% to 5% by weight.

In a further preferred embodiment, the fat composition obtained in step c) has a weight ratio of StOSt triglycerides to StOO triglycerides from 0.50 to 11.00; based on the total glycerides present in the fat, wherein St is stearic acid and O is oleic acid, more preferably from 0.80 to 9.00, even more preferably from 1.00 to 7.00 and most preferably from 1.50 to 5.00.

In a further preferred embodiment in combination with the features disclosed herein, the fat composition obtained in step c) comprises from 0 % to 15% by weight of AOSt triglycerides based on the total glycerides present in the fat, wherein A is arachidic acid, St is stearic acid and O is oleic acid, more preferably from 1% to 10% by weight, even more preferably from 1.0% to 5.0% by weight and most preferably from 1.8% to 4.0% by weight.

Accordingly, in a preferred embodiment, the process of preparing a fat composition according to the invention comprises the steps of: a) providing a fat selected from the group consisting of shea butter, sal butter, mango kernel oil, illipe butter, kokum butter and mowrah butter comprising from 25% to 70% by weight of StOSt triglycerides based on the total glycerides present in the fat, wherein St is stearic acid and O is oleic acid; b) fractionating the fat of in step a) to form a stearin fraction comprising from 60% to 95% by weight of StOSt triglycerides based on the total glycerides present in the fat, wherein St is stearic acid and O is oleic acid; and c) blending the fat of step a) and the stearin fraction obtained in step b) in a weight ratio of from 90:10 to 15:85 to form a fat composition comprising from 35% to 70% by weight of StOSt triglycerides; from 5% to 40% by weight of StOO triglycerides; at most 15% by weight of POO triglyceride; and having a weight ratio of StOSt to StOO triglycerides from 0.50 to 11.00; based on the total glycerides present in the fat, wherein P is palmitic acid, St is stearic acid and O is oleic acid; from 30% to 67% by weight of stearic acid (C18:0); from 30% to 60% by weight of oleic acid (C18:1); and at most 12% by weight of palmitic acid (C16:0); said percentage of acid referring to acids bound as acyl groups in glycerides in the fat composition and being based on the total weight of C8 to C24 fatty acids; and has the fat composition obtained in step c) has from 25 to 80 solid fat content at 20°C; from 15 to 75 solid fat content at 25°C; from 10 to 68 solid fat content at 30°C; from 5 to 50 solid fat content at 35°C; and from 0 to 12 solid fat content at 40°C; measured on 26°C stabilized fat according to ISO 8292-1.

In a more preferred embodiment, the process of preparing a fat composition according to the invention comprises the steps of: a) providing a fat selected from the group consisting of shea butter, sal butter, mango kernel oil, illipe butter, kokum butter and mowrah butter comprising from 30% to 70% by weight of StOSt triglycerides based on the total glycerides present in the fat, wherein St is stearic acid and O is oleic acid; b) fractionating the fat of step a) to form a stearin fraction comprising from 62% to 90% by weight of StOSt triglycerides based on the total glycerides present in the fat, wherein St is stearic acid and O is oleic acid; and c) blending the fat of step a) and the stearin fraction obtained in step b) in a weight ratio of from 85:15 to 20:80 to form a fat composition comprising from 40% to 65% by weight of StOSt triglycerides; from 7% to 35% by weight of StOO triglycerides; from 0% to 10% by weight of POP triglycerides; and having a weight ratio of StOSt to StOO triglycerides from 0.80 to 9.00; based on the total glycerides present in the fat, wherein P is palmitic acid, St is stearic acid and O is oleic acid; from 35% to 65% by weight of stearic acid (C18:0); from 32% to 55% by weight of oleic acid (C18:1); and from 0% to 10% by weight of palmitic acid (C16:0); said percentage of acid referring to acids bound as acyl groups in glycerides in the fat composition and being based on the total weight of C8 to C24 fatty acids; and has from 30 to 70 solid fat content at 20°C; from 25 to 68 solid fat content at 25°C; from 20 to 65 solid fat content at 30°C; from 7 to 45 solid fat content at 35°C; and from 0 to 10 solid fat content at 40°C; measured on 26°C stabilized fat according to ISO 8292-1.

In an even more preferred embodiment, the process of preparing a fat composition according to the invention comprises the steps of: a) providing a fat which consists of shea butter comprising from 35% to 65% by weight of StOSt triglycerides based on the total glycerides present in the fat, wherein St is stearic acid and O is oleic acid; b) fractionating the shea butter of step a) to form a stearin fraction comprising from 65% to 85% by weight of StOSt triglycerides based on the total glycerides present in the fat, wherein St is stearic acid and O is oleic acid; and c) blending the shea butter of step a) and the stearin fraction obtained in step b) in a weight ratio of from 85:15 to 30:70 to form a fat composition comprising from 42% to 63% by weight of StOSt triglycerides; from 9% to 30% by weight of StOO triglycerides; from 0.1% to 8% by weight of POP triglycerides; and having a weight ratio of StOSt to StOO triglycerides from 1.00 to 7.00; based on the total glycerides present in the fat, wherein P is palmitic acid, St is stearic acid and O is oleic acid; from 40% to 60% by weight of stearic acid (C18:0); from 35% to 50% by weight of oleic acid (C18:1); and from 0.1% to 8% by weight of palmitic acid (C16:0); said percentage of acid referring to acids bound as acyl groups in glycerides in the fat composition and being based on the total weight of C8 to C24 fatty acids; and has from 35 to 68 solid fat content at 20°C; from 35 to 67 solid fat content at 25°C; from 25 to 63 solid fat content at 30°C; from 9 to 40 solid fat content at 35°C; and from 1 to 5 solid fat content at 40°C; measured on 26°C stabilized fat according to ISO 8292-1.

In a most preferred embodiment, the process of preparing a fat composition according to the invention comprises the steps of: a) providing a fat source which consists of shea butter comprising from 37% to 63% by weight of StOSt triglycerides based on the total glycerides present in the fat, wherein St is stearic acid and O is oleic acid; b) fractionating the shea butter of step a) to form a stearin fraction comprising from 68% to 82% by weight of StOSt triglycerides based on the total glycerides present in the fat, wherein St is stearic acid and O is oleic acid; and c) blending the shea butter of step a) and the stearin fraction obtained in step b) in a weight ratio of from 82:18 to 35:65 to form a fat composition comprising from 45% to 60% by weight of StOSt triglycerides; from 11% to 25% by weight of StOO triglycerides; from 0.1% to 5% by weight of POP triglycerides; and having a weight ratio of StOSt to StOO triglycerides from 1.50 to 5.00; based on the total glycerides present in the fat, wherein P is palmitic acid, St is stearic acid and O is oleic acid; from 42% to 58% by weight of stearic acid (C18:0); from 35% to 45% by weight of oleic acid (C18:1); and from 0.1% to 7% by weight of palmitic acid (C16:0); said percentage of acid referring to acids bound as acyl groups in glycerides in the fat composition and being based on the total weight of C8 to C24 fatty acids; and has from 40 to 67 solid fat content at 20°C; from 40 to 65 solid fat content at 25°C; from 30 to 60 solid fat content at 30°C; from 12 to 38 solid fat content at 35°C; and from 1 to 3 solid fat content at 40°C; measured on 26°C stabilized fat according to ISO 8292-1.

The fat composition obtained in step c) may comprise from 35% to 59% by weight StOSt triglycerides based on the total glycerides present in the fat, wherein St is stearic acid and O is oleic acid, for example from 40% to 58.5% by weight. In one embodiment, the composition obtained in step c) may comprise from 45% to 59% by weight StOSt triglycerides based on the total glycerides present in the fat, wherein St is stearic acid and O is oleic acid, such as from 45% to 58.5% by weight.

The fat composition obtained in step c) optionally has a weight ratio of POSt triglycerides to StOSt triglycerides of from 0.04 to 0.16, such as from 0.05 to 0.15, for example from 0.06 to 0.14 or from 0.07 to 0.13, based on the total glycerides present in the fat, wherein St is stearic acid, P is palmitic acid and O is oleic acid.

The description also relates as not part of the present invention to a fat composition produced according to the process of the invention.

The description also relates as not part of the present invention to the use of a fat composition produced according to the process of the invention in a confectionery application, preferably in confectionery coating applications and more preferably in a chocolate application, such as dark chocolate, milk chocolate, white chocolate or ruby chocolate.

The description also relates as not part of the present invention to a confectionery product comprising at least 1% by weight of the fat composition produced according to the process of the invention, preferably from 1% to 50% by weight and more preferably from 1% to 30% by weight; and at least 20% by weight of sugar, preferably from 25% to 50% by weight and more preferably from 35% to 50% by weight.

The confectionery product not according to the invention preferably further comprises at least 5% by weight of one or more of cocoa mass, cocoa butter, milk fat, skimmed milk powder, milk powder, vegetable milk powder, dairy powder, sweetener other than sugar or mixture thereof. The listing or discussion of an apparently prior-published document in this specification should not necessarily be taken as an acknowledgement that the document is part of the state of the art or is common general knowledge.

The following non-limiting examples illustrate the invention and do not limit its scope in any way. In the examples and throughout this specification, all percentages, parts and ratios are by weight unless indicated otherwise.

### Examples

### Example 1 - Process to prepare the fat compositions

Shea butter containing 41% by weight of StOSt is one-stage fractionated using acetone to obtain shea stearin fraction (hard fraction) and shea olein fraction (soft fraction). The content of StOSt in the shea stearin fraction is concentrated up to 71% by weight of StOSt.

In addition, hard palm mid fraction is obtained from palm oil by multiple-stage wet fractionation using acetone.

Fat composition A is prepared by blending 80% by weight of shea butter and 20% by weight of shea stearin. Fat composition B is prepared by blending 65% by weight of shea butter and 35% by weight of shea stearin. Fat composition C is prepared by blending 40% by weight of shea butter and 60% by weight of shea stearin.

Reference fat composition is prepared by blending 45% shea stearin and 55% hard palm mid fraction. In order to produce Reference fat composition, different fat sources (palm oil and shea butter) are required and multiple-stage complex processes need to be applied.

Comparative fat composition is prepared by blending 70% shea butter and 30% shea olein.

All the fat compositions are bleached and deodorized before used in the following applications.

### Example 2 - Analytical results of the prepared fat compositions

The analytical results of Fat composition A, Fat composition B, Fat composition C, Reference fat composition and Comparative fat composition are shown in Table 1.

**Table 1: Analytical results of Fat composition A, Fat composition B, Fat composition C, Reference fat composition and Comparative fat composition**

| | Fat composition A | Fat composition B | Fat composition C | Reference fat composition | Comparative fat composition |
|---|---|---|---|---|---|
| C8:0 | 0.0 | 0.0 | 0.0 | 0.0 | 0.0 |
| C10:0 | 0.0 | 0.0 | 0.0 | 0.0 | 0.0 |
| C12:0 | 0.1 | 0.1 | 0.3 | 0.2 | 0.2 |
| C14:0 | 0.1 | 0.0 | 0.2 | 0.6 | 0.1 |
| C16:0 | 3.4 | 3.6 | 4.8 | 33.2 | 5.6 |
| C18:0 | 45.9 | 48.0 | 51.3 | 29.4 | 37.8 |
| C18:1 | 42.2 | 41.2 | 37.1 | 31.8 | 47.3 |
| C18:2 | 5.6 | 4.9 | 4.2 | 3.2 | 6.8 |
| C18:3 | 0.2 | 0.1 | 0.1 | 0.1 | 0.2 |
| C20:0 | 1.5 | 1.6 | 1.5 | 1.0 | 1.3 |
| SAFA | 51.6 | 53.5 | 58.4 | 64.7 | 45.3 |
| MUFA | 42.5 | 41.4 | 37.2 | 31.9 | 47.7 |
| PUFA | 5.8 | 5.0 | 4.3 | 3.3 | 7.0 |
| Trans | 0.3 | 0.1 | 0.1 | 0.2 | 0.4 |
| PPSt | 0.0 | 0.0 | 0.1 | 0.3 | 0.4 |
| POP | 0.2 | 0.5 | 1.2 | 36.1 | 3.7 |
| PLP | 0.3 | 0.2 | 0.5 | 3.7 | 1.1 |
| PStSt | 0.3 | 0.2 | 0.3 | 0.2 | 0.2 |
| POSt | 5.5 | 5.4 | 6.0 | 9.8 | 5.3 |
| POO | 2.2 | 1.9 | 1.7 | 1.9 | 4.2 |
| PLSt | 1.3 | 1.2 | 0.9 | 0.9 | 1.7 |
| PLO | 0.7 | 0.7 | 0.5 | 0.4 | 1.4 |
| PLL | 0.2 | 0.4 | 0.1 | 0.0 | 0.0 |
| StStSt | 1.3 | 1.5 | 1.4 | 0.9 | 0.9 |
| StOSt | 47.0 | 51.1 | 58.5 | 33.9 | 30.2 |
| StOO | 22.4 | 19.8 | 12.4 | 2.8 | 31.1 |
| StLSt | 4.6 | 4.2 | 5.1 | 2.5 | 3.8 |
| OOO | 4.0 | 3.7 | 2.2 | 0.4 | 6.1 |
| StLO | 3.9 | 3.1 | 2.0 | 0.4 | 5.5 |
| OLO | 1.0 | 0.9 | 0.5 | 0.0 | 1.5 |
| StLL | 0.7 | 0.5 | 0.3 | 0.0 | 0.9 |
| AStSt | 0.3 | 0.3 | 0.2 | 0.0 | 0.0 |
| AOSt | 2.0 | 2.4 | 2.7 | 1.4 | 1.2 |
| AOO | 1.1 | 1.0 | 0.7 | 0.0 | 1.1 |
| ALSt | 0.2 | 0.2 | 0.2 | 0.0 | 0.0 |
| StOSt/StOO | 2.10 | 2.58 | 4.72 | 12.11 | 0.97 |
| POSt/StOSt | 0.12 | 0.11 | 0.10 | 0.29 | 0.18 |
| S26N20 | 45 | 52 | 65 | 68 | 20 |
| S26N25 | 43 | 51 | 64 | 63 | 7 |
| S26N30 | 37 | 45 | 59 | 51 | 4 |
| S26N35 | 14 | 22 | 36 | 8 | 2 |
| S26N40 | 2 | 2 | 1 | 0 | 1 |

In the above table:
Cx:y refers to a fatty acid having x carbon atoms and y double bonds; levels determined by GC-FAME (ISO 12966-2 and ISO 12966-4);
SAFA refers to saturated fatty acids;
MUFA refers to monounsaturated fatty acids;
PUFA refers to polyunsaturated fatty acids;
Trans refers to trans fatty acids: unsaturated fatty acids having a double bond in a trans arrangement;
O, P, St, L and A refer to oleic, palmitic, stearic, linoleic and arachidic acids, respectively; Triglyceride compositions: e.g., POSt, and other triglycerides were determined by GC (ISO 23275), wherein each GC peak includes triglycerides having the same fatty acids in different positions e.g., POSt is in the same signal peak as PStO and StOP; and
S26Nx refers to solid fat content determined by NMR on stabilized fat (stabilized at 26°C for 40 hours) measured at x°C according to ISO 8292-1.

### Example 3 - Preparation of dark chocolates and milk chocolates

The chocolates were produced using the fat compositions prepared above. The chocolate recipes used are set out in the following tables: Table 2 and Table 3.

**Table 2: Recipe for dark chocolate**

| Ingredients | Weight% |
|---|---|
| Cocoa mass | 43.8 |
| Sugar | 43.8 |
| Cocoa butter | 7.0 |
| Fat composition | 5.0 |
| Soy lecithin | 0.4 |

**Table 3: Recipe for milk chocolate**

| Ingredients | Weight% |
|---|---|
| Sugar | 41.8 |
| Cocoa butter | 19.4 |
| Fat composition | 5.0 |
| Skimmed milk powder | 16.8 |
| Cocoa mass | 11.0 |
| Milk fat | 5.6 |
| Soy lecithin | 0.4 |

The chocolates were produced as well known in the art by using a roller refiner and a conche. The chocolates were tempered in the Leatherhead tempering kettle and moulded into bars. This means that the chocolates are cooled down until 26-28 °C and then heated until 31-32 °C. The temper index was determined with a temper meter. The moulds were cooled in a static cooling cabinet with high wind speed. The contraction in the moulds was observed during the cooling cycle. The chocolates bars were made and used for different evaluations including hardness, sensory evaluation and storage test. The overview of the chocolate bars in relation to the fat composition used is listed in Table 4.

**Table 4 - Overview of the chocolate bars**

| Fat compositions used in chocolate bars | Fat composition A | Fat composition B | Fat composition C | Reference fat composition | Comparative fat composition |
|---|---|---|---|---|---|
| Dark chocolates | Dark chocolate A | Dark chocolate B | Dark chocolate C | Reference dark chocolate | Comparative dark chocolate |
| Milk chocolates | Milk chocolate A | Milk chocolate B | Milk chocolate C | Reference milk chocolate | Comparative milk chocolate |

Regarding the dark chocolates, the tempering behaviors of Comparative dark chocolate are very similar to those of Reference dark chocolate. Dark chocolate A, Dark chocolate B and Dark chocolate C could be deposited at a higher temperature which indicates that more seeds have been formed during the tempering process. This indicates that the fats produced by the process according to the invention (Fat composition A, Fat composition B and Fat composition C) can be tempered more easily than Reference fat composition and Comparative fat composition.

Regarding the milk chocolates, Milk chocolate A shows similar tempering behaviors to Reference milk chocolate. For Milk chocolate B and Milk chocolate C, the depositing temperature was higher than that of Reference milk chocolate. This indicates that Milk chocolate B and Milk Chocolate C are particularly easy to temper. Milk chocolate C has a depositing temperature similar to that of Comparative milk chocolate.

It can be concluded that Fat composition B and Fat composition C produced by the process according to the invention are particularly preferred.

### Example 4 - Hardness of chocolate bars

Hardness of the chocolate bars was measured using the Brookfield texture analyzer (needle TA9 and penetration depth of 2 mm at 0.5 mm/sec) after storing the samples at 20°C for 2 days, 1 month and 3 months. Each sample was measured 5 times and the average results are shown in Table 5 and Table 6.

**Table 5 - Hardness of dark chocolate bars**

| Hardness (g) of dark chocolate bars | Dark chocolate A | Dark chocolate B | Dark chocolate C | Reference dark chocolate | Comparative dark chocolate |
|---|---|---|---|---|---|
| After 2 days | 547 | 549 | 532 | 576 | 271 |
| After 1 month | 508 | 522 | 523 | 515 | 290 |
| After 3 months | 566 | 546 | 558 | 627 | 316 |

**Table 5 - Hardness of milk chocolate bars**

| Hardness (g) of dark chocolate bars | Milk chocolate A | Milk chocolate B | Milk chocolate C | Reference milk chocolate | Comparative milk chocolate |
|---|---|---|---|---|---|
| After 2 days | 305 | 296 | 314 | 377 | 103 |
| After 1 month | 350 | 281 | 297 | 417 | 122 |
| After 3 months | 328 | 311 | 331 | 409 | 173 |

Based on the results, it can be concluded that the chocolates (either dark chocolate or milk chocolate) made from the fat compositions produced by the process according to the invention have the comparable hardness as the reference. This suggests that the desired texture of the chocolates is still surprisingly obtained by using the fat compositions produced by the simplified and efficient process according to the invention. In particular, the increase of the hardness in the chocolates made from the fat compositions produced by the process according to the invention is relatively limited, which indicates less pronounced post hardening and the desired prolonged shelf life in terms of texture.

### Example 5 - Sensory evaluation of chocolate bars

An expert sensory panel (n=6) evaluated the chocolate samples after 1 month of storage at 18°C. The chocolate samples were evaluated against the chocolate containing only cocoa butter (which has score of 0 for all attributes) and scored them on the standard attributes in Table 6.

**Table 6 - Sensory attributes**

| **Sensory attributes** | **Definition** |
|---|---|
| Meltdown | Total time the sample takes to completely melt in the mouth |
| Coolness | The coolness of the melted sample in the mouth |
| Waxiness | Residual sample which does not melt whilst melting the sample in the mouth |
| Flavour release time | The time it takes before flavour is released in the mouth |
| Flavour impact | The impact of the flavour which is released from the sample |
| Flavour after effect | The flavour effect after melting in the mouth |

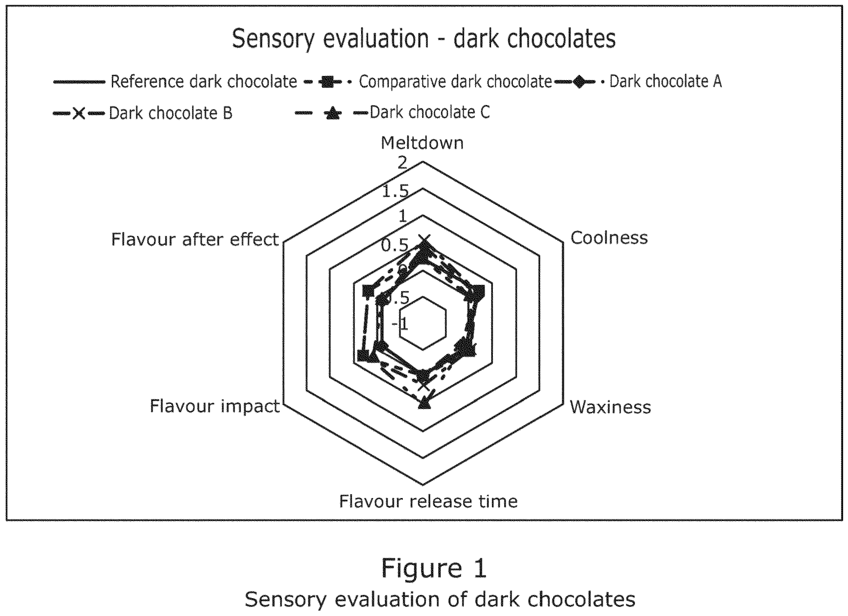

It has been observed that for most of the attributes the results are overall comparable. However, Dark chocolate A, Dark chocolate B and Dark chocolate C by using the fat compositions produced by the simplified and efficient process according to the invention surprisingly have a desirable quick meltdown compared to Reference dark chocolate and Comparative dark chocolate (the evaluation results illustrated in a spider plot diagram - Figure 1).

## Claims

1. Process of preparing a fat composition comprising the steps of:
a) providing a fat, preferably from a single natural source, comprising at least 25% by weight of StOSt triglycerides based on the total glycerides present in the fat, wherein St is stearic acid and O is oleic acid;
b) fractionating the fat source obtained in step a) to form a stearin fraction comprising at least 60% by weight of StOSt triglycerides based on the total glycerides present in the fat, wherein St is stearic acid and O is oleic acid;
c) blending a fat which is the same as that provided in step a) and the stearin fraction obtained in step b) in a weight ratio of from 90:10 to 10:90 to form a fat composition.

2. Process according to Claim 1, wherein the prepared fat composition is a confectionery fat composition, preferably a coating fat composition and more preferably a cocoa butter equivalent (CBE) fat composition.

3. Process according to Claim 1 or Claim 2, wherein in step a) the fat comprises from 25% to 70% by weight of StOSt triglycerides based on the total glycerides present in the fat, wherein St is stearic acid and O is oleic acid, preferably from 30% to 70% by weight, more preferably from 35% to 65% by weight and even more preferably from 37% to 63% by weight.

4. Process according to any one of the preceding claims, wherein in step a) the fat is selected from the group consisting of shea butter, sal butter, mango kernel oil, illipe butter, kokum butter and mowrah butter, preferably the fat consists of shea butter.

5. Process according to any one of the preceding claims, wherein in step b) the formed stearin fraction comprises from 60% to 95% by weight of StOSt triglycerides based on the total glycerides present in the fat, wherein St is stearic acid and O is oleic acid, preferably from 62% to 90% by weight, more preferably from 65% to 85% by weight and even more preferably from 68% to 82% by weight.

6. Process according to any one of the preceding claims, wherein in step b) the fractionating is performed by means of dry fractionation, solvent fractionation or detergent fractionation, preferably by means of dry fractionation or solvent fractionation and more preferably by means of solvent fractionation.

7. Process according to any one of the preceding claims, wherein in step c) the weight ratio of the fat source obtained in step a) to the stearin fraction obtained in step b) is from 90:10 to 15:85, preferably from 85:15 to 20:80, more preferably from 85:15 to 30:70 and even more preferably from 82:18 to 35:65.

8. Process according to any one of the preceding claims, wherein the fat composition obtained in step c) comprises:
from 35% to 70% by weight of StOSt triglycerides, preferably from 40% to 65% by weight, more preferably from 42% to 63% by weight and even more preferably from 45% to 60% by weight, such as from 45% to 59% by weight, for example from 45% to 58.5% by weight; and/or
from 5% to 40% by weight of StOO triglycerides, preferably from 7% to 35% by weight, more preferably from 9% to 30% by weight and even more preferably from 11% to 25% by weight;
based on the total glycerides present in the fat, wherein St is stearic acid and O is oleic acid.

9. Process according to any one of the preceding claims, wherein the fat composition obtained in step c) comprises:
from 30% to 67% by weight of stearic acid (C18:0), preferably from 35% to 65% by weight, more preferably from 40% to 60% by weight, even more preferably from 42% to 58% by weight; and/or
from 30% to 60% by weight of oleic acid (C18:1), preferably from 32% to 55% by weight, more preferably from 35% to 50% by weight and even more preferably from 35% to 45% by weight; and/or
at most 12% by weight of palmitic acid (C16:0), preferably from 0% to 10% by weight, more preferably from 0.1% to 8% by weight and even more preferably from 0.1% to 7% by weight;
said percentage of acid referring to acids bound as acyl groups in glycerides in the fat composition and being based on the total weight of C8 to C24 fatty acids.

10. Process according to any one of the preceding claims, wherein the fat composition obtained in step c) has:
from 25 to 80 solid fat content at 20°C, preferably from 30 to 70, more preferably from 35 to 68 and even more preferably from 40 to 67; and/or
from 15 to 75 solid fat content at 25°C, preferably from 25 to 68, more preferably from 35 to 67 and even more preferably from 40 to 65; and/or
from 10 to 68 solid fat content at 30°C, preferably from 20 to 65, more preferably from 25 to 63 and even more preferably from 30 to 60; and/or
from 5 to 50 solid fat content at 35°C, preferably from 7 to 45, more preferably from 9 to 40 and even more preferably from 12 to 38; and/or
from 0 to 12 solid fat content at 40°C, preferably from 0 to 10, more preferably from 1 to 5 and even more preferably from 1 to 3;
measured on 26°C stabilized fat according to ISO 8292-1.

11. Process according to any one of the preceding claims, wherein the fat composition obtained in step c) comprises from 0% to 2% by weight of trans fatty acids, preferably from 0% to 1.5% by weight of trans fatty acids, more preferably from 0.1% to 1% by weight of trans fatty acid and even more preferably from 0.1% to 0.8% by weight.

12. Process according to any one of the preceding claims, wherein the fat composition obtained in step c) has a weight ratio of StOSt triglycerides to StOO triglycerides from 0.50 to 11.00; based on the total glycerides present in the fat, wherein St is stearic acid and O is oleic acid, preferably from 0.80 to 9.00, more preferably from 1.00 to 7.00 and even more preferably from 1.50 to 5.00; and/or
wherein the fat composition obtained in step c) has a weight ratio of POSt triglycerides to StOSt triglycerides of from 0.04 to 0.16, such as from 0.05 to 0.15, for example from 0.06 to 0.14 or from 0.07 to 0.13, based on the total glycerides present in the fat, wherein St is stearic acid, P is palmitic acid and O is oleic acid.

13. A process for producing a confectionery product, which comprises preparing a fat composition according to any one of Claims 1 to 12, combining the fat composition with one or more confectionery ingredients, preferably selected from cocoa mass, cocoa butter, milk fat, skimmed milk powder, milk powder, vegetable milk powder, dairy powder, sweetener other than sugar and mixtures thereof, tempering the resulting confectionery composition and molding to form the confectionery product.

14. Process as claimed in Claim 13, wherein the confectionery product is a chocolate product or a coating.

## Patentansprüche

1. Verfahren zur Herstellung einer Fettzusammensetzung, das die folgenden Schritte umfasst:
a) Bereitstellen eines Fetts, vorzugsweise aus einer einzigen natürlichen Quelle, das zumindest 25 Gew.-% StOSt-Triglyceride bezogen auf die gesamten im Fett vorhandenen Glyceride umfasst, wobei St Stearinsäure ist und O Ölsäure ist;
b) Fraktionieren der in Schritt a) erhaltenen Fettquelle, um eine Stearinfraktion mit zumindest 60 Gew.-% StOSt-Triglyceriden bezogen auf die gesamten im Fett vorhandenen Glyceride zu erhalten, wobei St Stearinsäure ist und O Ölsäure ist;
c) Mischen eines Fetts, welches das gleiche ist wie das in Schritt a) bereitgestellte, und der in Schritt b) erhaltenen Stearinfraktion in einem Gewichtsverhältnis von 90:10 bis 10:90, um eine Fettzusammensetzung herzustellen.

2. Verfahren nach Anspruch 1, wobei die hergestellte Fettzusammensetzung eine Konfektfettzusammensetzung ist, vorzugsweise eine Überzugsfettzusammensetzung und noch bevorzugter eine Kakaobutteräquivalent(CBE)-Fettzusammensetzung.

3. Verfahren nach Anspruch 1 oder Anspruch 2, wobei in Schritt a) das Fett 25 bis 70 Gew.-% StOSt-Triglyceride bezogen auf die gesamten im Fett vorhandenen Glyceride umfasst, wobei St Stearinsäure ist und O Ölsäure ist, vorzugsweise 30 bis 70 Gew.-%, noch bevorzugter 35 bis 65 Gew.-% und noch bevorzugter 37 bis 63 Gew.-%.

4. Verfahren nach einem der vorangegangenen Ansprüche, wobei in Schritt a) das Fett aus der aus Sheabutter, Salbutter, Mangokernöl, Illipebutter, Kokumbutter und Mowrahbutter bestehenden Gruppe ausgewählt ist, wobei das Fett vorzugsweise aus Sheabutter besteht.

5. Verfahren nach einem der vorangegangenen Ansprüche, wobei in Schritt b) die hergestellte Stearinfraktion 60 bis 95 Gew.-% StOSt-Triglyceride bezogen auf die gesamten im Fett vorhandenen Glyceride umfasst, wobei St Stearinsäure ist und O Ölsäure ist, vorzugsweise 62 bis 90 Gew.-%, noch bevorzugter 65 bis 85 Gew.-% und noch bevorzugter 68 bis 82 Gew.-%.

6. Verfahren nach einem der vorangegangenen Ansprüche, wobei in Schritt b) das Fraktionieren durch Trockenfraktionieren, Lösungsmittelfraktionieren oder Detergensfraktionieren erfolgt, vorzugsweise durch Trockenfraktionieren oder Lösungsmittelfraktionieren und noch bevorzugter durch Lösungsmittelfraktionieren.

7. Verfahren nach einem der vorangegangenen Ansprüche, wobei in Schritt c) das Gewichtsverhältnis zwischen der in Schritt a) erhaltenen Fettquelle und der in Schritt b) erhaltenen Stearinfraktion 90:10 bis 15:85 beträgt, vorzugsweise 85:15 bis 20:80, noch bevorzugter 85:15 bis 30:70 und noch bevorzugter 82:18 bis 35:65.

8. Verfahren nach einem der vorangegangenen Ansprüche, wobei die in Schritt c) erhaltene Fettzusammensetzung umfasst:
35 bis 70 Gew.-% StOSt-Triglyceride, vorzugsweise 40 bis 65 Gew.-%, noch bevorzugter 42 bis 63 Gew.-% und noch bevorzugter 45 bis 60 Gew.-%, beispielsweise 45 bis 59 Gew.-%, z. B. 45 bis 58,5 Gew.-%; und/oder 5 bis 40 Gew.-% St00-Triglyceride, vorzugsweise 7 bis 35 Gew.-%, noch bevorzugter 9 bis 30 Gew.-% und noch bevorzugter 11 bis 25 Gew.-%;
bezogen auf die gesamten im Fett vorhandenen Glyceride, wobei St Stearinsäure ist und O Ölsäure ist.

9. Verfahren nach einem der vorangegangenen Ansprüche, wobei die in Schritt c) erhaltene Fettzusammensetzung umfasst:
30 bis 67 Gew.-% Stearinsäure (C18:0), vorzugsweise 35 bis 65 Gew.-%, noch bevorzugter 40 bis 60 Gew.-%, noch bevorzugter 42 bis 58 Gew.-%; und/oder
30 bis 60 Gew.-% Ölsäure (C18:1), vorzugsweise 32 bis 55 Gew.-%, noch bevorzugter 35 bis 50 Gew.-% und noch bevorzugter 35 bis 45 Gew.-%; und/oder
höchstens 12 Gew.-% Palmitinsäure (C16:0), vorzugsweise 0 bis 10 Gew.-%, noch bevorzugter 0,1 bis 8 Gew.-% und noch bevorzugter 0,1 bis 7 Gew.-%;
wobei sich der Säureprozentsatz auf Säuren bezieht, die als Acylgruppen in Glyceriden in der Fettzusammensetzung gebunden sind, und auf dem Gesamtgewicht von C8- bis C24-Fettsäuren basiert.

10. Verfahren nach einem der vorangegangenen Ansprüche, wobei die in Schritt c) erhaltene Fettzusammensetzung Folgendes aufweist:
einen Gehalt an festen Fetten von 25 bis 80 bei 20 °C, vorzugsweise von 30 bis 70, noch bevorzugter von 35 bis 68 und noch bevorzugter von 40 bis 67; und/oder
einen Gehalt an festen Fetten von 15 bis 75 bei 25 °C, vorzugsweise von 25 bis 68, noch bevorzugter von 35 bis 67 und noch bevorzugter von 40 bis 65; und/oder
einen Gehalt an festen Fetten von 10 bis 68 bei 30 °C, vorzugsweise von 20 bis 65, noch bevorzugter von 25 bis 63 und noch bevorzugter von 30 bis 60; und/oder
einen Gehalt an festen Fetten von 5 bis 50 bei 35 °C, vorzugsweise von 7 bis 45, noch bevorzugter von 9 bis 40 und noch bevorzugter von 12 bis 38; und/oder
einen Gehalt an festen Fetten von 0 bis 12 bei 40 °C, vorzugsweise von 0 bis 10, noch bevorzugter von 1 bis 5 und noch bevorzugter von 1 bis 3;
gemessen an bei 26 °C stabilisiertem Fett gemäß ISO 8292-1.

11. Verfahren nach einem der vorangegangenen Ansprüche, wobei die in Schritt c) erhaltenen Fettzusammensetzung 0 bis 2 Gew.-% Trans-Fettsäuren umfasst, vorzugsweise 0 bis 1,5 Gew.-% Trans-Fettsäuren und noch bevorzugter 0,1 bis 1 Gew.-% Trans-fettsäuren und noch bevorzugter 0,1 bis 0,8 Gew.-%.

12. Verfahren nach einem der vorangegangenen Ansprüche, wobei die in Schritt c) erhaltene Fettzusammensetzung ein Gewichtsverhältnis zwischen StOSt-Triglyceriden und St00-Triglyceriden von 0,50 bis 11,00 aufweist; bezogen auf die gesamten im Fett vorhandenen Glyceride, wobei St Stearinsäure ist und O Ölsäure ist, vorzugsweise 0,80 bis 9,00, noch bevorzugter 1,00 bis 7,00 und noch bevorzugter 1,50 bis 5,00; und/oder
wobei die in Schritt c) erhaltene Fettzusammensetzung ein Gewichtsverhältnis zwischen POSt-Triglyceriden und StOSt-Triglyceriden von 0,04 bis 0,16 aufweist, beispielsweise von 0,05 bis 0,15, z. B. von 0,06 bis 0,14 oder von 0,07 bis 0,13, bezogen auf die gesamten im Fett vorhandenen Glyceride, wobei St Stearinsäure ist, P Palmitinsäure ist und O Ölsäure ist.

13. Verfahren zur Herstellung eines Konfektprodukts, welches das Herstellen einer Fettzusammensetzung nach einem der Ansprüche 1 bis 12, das Vereinigen der Fettzusammensetzung mit einer oder mehreren Konfektzutaten, vorzugsweise ausgewählt aus Kakaomasse, Kakaobutter, Milchfett, Magermilchpulver, Milchpulver, Pflanzenmilchpulver, Molkereipulver, Süßstoff ausgenommen Zucker und Gemischen davon, das Härten der resultierenden Konfektzusammensetzung und Formen zur Ausbildung des Konfektprodukts umfasst.

14. Verfahren nach Anspruch 13, wobei das Konfektprodukt ein Schokoladeprodukt oder ein Überzug ist.

## Revendications

1. Procédé de préparation d'une composition de matière grasse comprenant les étapes suivantes :
a) la fourniture d'une matière grasse, de préférence à partir d'une source naturelle unique, comprenant au moins 25 % en poids de triglycérides StOSt sur la base du total des glycérides présents dans la matière grasse, dans lequel St représente l'acide stéarique et O représente l'acide oléique ;
b) le fractionnement de la source de matière grasse obtenue à l'étape a) pour former une fraction de stéarine comprenant au moins 60 % en poids de triglycérides StOSt sur la base du total des glycérides présents dans la matière grasse, dans lequel St représente l'acide stéarique et O représente l'acide oléique ;
c) le mélange d'une matière grasse qui est la même que celle fournie à l'étape a) et de la fraction de stéarine obtenue à l'étape b) dans un rapport en poids de 90:10 à 10:90 pour former une composition de matière grasse.

2. Procédé selon la revendication 1, dans lequel la composition de matière grasse préparée est une composition de matière grasse de confiserie, de préférence une composition de matière grasse d'enrobage et avec plus de préférence une composition de matière grasse d'équivalent de beurre de cacao (CBE).

3. Procédé selon la revendication 1 ou 2, dans lequel, à l'étape a), la matière grasse comprend de 25 % à 70 % en poids de triglycérides StOSt sur la base du total des glycérides présents dans la matière grasse, dans lequel St représente l'acide stéarique et O représente l'acide oléique, de préférence de 30 % à 70 % en poids, avec plus de préférence de 35 % à 65 % en poids et avec encore plus de préférence de 37 % à 63 % en poids.

4. Procédé selon l'une quelconque des revendications précédentes, dans lequel, à l'étape a), la matière grasse est choisie dans le groupe se composant de beurre de karité, beurre de sal, huile de noyau de mangue, beurre d'illipé, beurre de kokum et beurre de mowrah, de préférence la matière grasse se compose de beurre de karité.

5. Procédé selon l'une quelconque des revendications précédentes, dans lequel, à l'étape b), la fraction de stéarine formée comprend de 60 % à 95 % en poids de triglycérides StOSt sur la base du total des glycérides présents dans la matière grasse, dans lequel St représente l'acide stéarique et O représente l'acide oléique, de préférence de 62 % à 90 % en poids, avec plus de préférence de 65 % à 85 % en poids et avec encore plus de préférence de 68 % à 82 % en poids.

6. Procédé selon l'une quelconque des revendications précédentes, dans lequel, à l'étape b), le fractionnement est réalisé par fractionnement à sec, fractionnement de solvant ou fractionnement de détergent, de préférence par fractionnement à sec ou fractionnement de solvant, et avec plus de préférence par fractionnement de solvant.

7. Procédé selon l'une quelconque des revendications précédentes, dans lequel, à l'étape c), le rapport en poids de la source de matière grasse obtenue à l'étape a) sur la fraction de stéarine obtenue à l'étape b) est de 90:10 à 15:85, de préférence de 85:15 à 20:80, avec plus de préférence de 85:15 à 30:70 et avec encore plus de préférence de 82:18 à 35:65.

8. Procédé selon l'une quelconque des revendications précédentes, dans lequel la composition de matière grasse obtenue à l'étape c) comprend :
de 35 % à 70 % en poids de triglycérides StOSt, de préférence de 40 % à 65 % en poids, avec plus de préférence de 42 % à 63 % en poids et avec encore plus de préférence de 45 % à 60 % en poids, comme de 45 % à 59 % en poids, par exemple de 45 % à 58,5 % en poids ; et/ou
de 5 % à 40 % en poids de triglycérides StOO, de préférence de 7 % à 35 % en poids, avec plus de préférence de 9 % à 30 % en poids et avec encore plus de préférence de 11 % à 25 % en poids ;
sur la base du total des glycérides présents dans la matière grasse, dans lequel St représente l'acide stéarique et O représente l'acide oléique.

9. Procédé selon l'une quelconque des revendications précédentes, dans lequel la composition de matière grasse obtenue à l'étape c) comprend :
de 30 % à 67 % en poids d'acide stéarique (C18:0), de préférence de 35 % à 65 % en poids, avec plus de préférence de 40 % à 60 % en poids, avec encore plus de préférence de 42 % à 58 % en poids ; et/ou
de 30 % à 60 % en poids d'acide oléique (C18:1), de préférence de 32 % à 55 % en poids, avec plus de préférence de 35 % à 50 % en poids et avec encore plus de préférence de 35 % à 45 % en poids ; et/ou
au plus 12 % en poids d'acide palmitique (C16:0), de préférence de 0 % à 10 % en poids, avec plus de préférence de 0,1 % à 8 % en poids et avec encore plus de préférence de 0,1 % à 7 % en poids ;
ledit pourcentage d'acide faisant référence à des acides liés en tant que groupes acyle dans des glycérides dans la composition de matière grasse et étant basé sur le poids total des acides gras C8 à C24.

10. Procédé selon l'une quelconque des revendications précédentes, dans lequel la composition de matière grasse obtenue à l'étape c) comprend :
une teneur en matière grasse solide de 25 à 80 à 20 °C, de préférence de 30 à 70, avec plus de préférence de 35 à 68 et avec encore plus de préférence de 40 à 67 ; et/ou une teneur en matière grasse solide de 15 à 75 à 25 °C, de préférence de 25 à 68, avec plus de préférence de 35 à 67 et avec encore plus de préférence de 40 à 65 ; et/ou une teneur en matière grasse solide de 10 à 68 à 30 °C, de préférence de 20 à 65, avec plus de préférence de 25 à 63 et avec encore plus de préférence de 30 à 60 ; et/ou une teneur en matière grasse solide de 5 à 50 à 35 °C, de préférence de 7 à 45, avec plus de préférence de 9 à 40 et avec encore plus de préférence de 12 à 38 ; et/ou une teneur en matière grasse solide de 0 à 12 à 40 °C, de préférence de 0 à 10, avec plus de préférence de 1 à 5 et avec encore plus de préférence de 1 à 3 ; et/ou mesurées sur une matière grasse stabilisée à 26 °C selon ISO 8292-1.

11. Procédé selon l'une quelconque des revendications précédentes, dans lequel la composition de matière grasse obtenue à l'étape c) comprend de 0 % à 2 % en poids d'acides gras trans, de préférence de 0 % à 1,5 % en poids d'acides gras trans, avec plus de préférence de 0,1 % à 1 % en poids d'acides gras trans et avec encore plus de préférence de 0,1 % à 0,8 % en poids.

12. Procédé selon l'une quelconque des revendications précédentes, dans lequel la composition de matière grasse obtenue à l'étape c) présente un rapport en poids de triglycérides StOSt sur triglycérides StOO de 0,50 à 11,00, sur la base du total des glycérides présents dans la matière grasse, dans lequel St représente l'acide stéarique et O représente l'acide oléique, de préférence de 0,80 à 9,00, avec plus de préférence de 1,00 à 7,00 et avec encore plus de préférence de 1,50 à 5,00 ; et/ou dans lequel la composition de matière grasse obtenue à l'étape c) présente un rapport en poids de triglycérides POSt sur triglycérides StOSt de 0,04 à 0,16, comme de 0,05 à 0,15, par exemple de 0,06 à 0,14 ou de 0,07 à 0,13, sur la base du total des glycérides présents dans la matière grasse, dans lequel St représente l'acide stéarique, P représente l'acide palmitique et O représente l'acide oléique.

13. Procédé de production d'un produit de confiserie, qui comprend la préparation d'une composition de matière grasse selon l'une quelconque des revendications 1 à 12, la combinaison de la composition de matière grasse avec un ou plusieurs ingrédients de confiserie, de préférence choisis parmi pâte de cacao, beurre de cacao, matière grasse du lait, lait en poudre écrémé, lait en poudre, lait en poudre végétal, produit laitier en poudre, édulcorant autre que du sucre et des mélanges de celui-ci, tempérage de la composition de confiserie résultante et moulage pour former le produit de confiserie.

14. Procédé selon la revendication 13, dans lequel le produit de confiserie est un produit de chocolat ou un enrobage.
